# EUROPÄISCHE PATENTSCHRIFT

(11) **EP 0 695 086 B1**
(45) Veröffentlichungstag und Bekanntmachung des Hinweises auf die Patenterteilung: **29.12.1999**
(21) Anmeldenummer: 95111666.4
(22) Anmeldetag: 25.07.1995
(51) Int. Cl.: H04N 5/45, H04N 5/445

(54) **Verfahren zur Übertragung eines Fernsehsignals, eines Begleitsignals und eines Steuersignals zu einer Grossbild-/Kleinbilddarstellung**
Method for transmitting a television signal, an accompanying signal and a control signal for displaying as a large or small image
Procédé de transmission d'un signal de télévision, d'un signal d'accompagnement et d'un signal de commande pour un affichage en image grande ou réduite

(30) Priorität: 27.07.1994 DE 4426554
(43) Veröffentlichungstag der Anmeldung: 31.01.1996
(73) Patentinhaber: GRUNDIG Aktiengesellschaft, 90762 Fürth (DE)
(72) Erfinder: Rosenberger, Winfried, Grundig E.M.V., D-90762 Fürth (DE)

(56) Entgegenhaltungen:
- EP-A- 0 387 517
- EP-A- 0 393 313
- EP-A- 0 434 301
- EP-A- 0 489 387
- EP-A- 0 558 182
- EP-A- 0 583 196
- WO-A-94/14282
- WO-A-94/14284
- GB-A- 2 262 407
- US-A- 4 071 697
- US-A- 4 954 882
- US-A- 5 130 800
- US-A- 5 148 275

## Beschreibung

Die Erfindung betrifft ein Verfahren zur Übertragung eines Fernsehsignals, eines Begleitsignals und eines Steuersignals zu einer Großbild-/Kleinbilddarstellung.

Es ist bereits bekannt, in den Austastlücken eines Fernsehsignals Videotextsignale zu übertragen. Diese Videotextsignale können beispielsweise Untertitel zu einer laufenden Fernsehsendung sein. Ein Benutzer hat die Möglichkeit, mittels der Fernbedienung eine Einblendung der Videotextuntertitel auf dem Bildschirm auslösen. Bei dieser Einblendung wird das am Bildschirm dargestellte Fernsehsignal vom Videotextsignal überlagert.

Aus dem Dokument WO-A-94 14284 ist es bekannt, auf einem programmierbaren Terminal Vorschläge für das Fernsehprogramm anzuzeigen. Dabei werden Zusatz- und Steuerdaten zusammen mit einem Videosignal von einer Kabelkopfstation an das Terminal gesendet. Beide werden zur Übertragung über das Kabel auf einen hochfrequenten Träger aufmoduliert und im Empfänger rückgewonnen. Die Textdaten werden abgespeichert und der Speicherauslesevorgang wird so gesteuert, daß das Videosignal und ein mit Hilfe der Zusatzdaten aufgebautes Menü in gewünschter Art und Weise auf dem Bildschirm angezeigt werden.

Ausgehend von diesem Stand der Technik liegt der Erfindung die Aufgabe zugrunde, ein Verfahren zur Übertragung eines Fernsehsignals und eines Begleitsignals so auszugestalten, daß die empfangsseitigen Darstellungsmöglichkeiten verbessert sind.

Diese Aufgabe wird durch ein Verfahren mit den im Anspruch 1 sowie einen Empfänger mit den in Anspruch 5 angegebenen Merkmalen gelöst. Vorteilhafte Ausgestaltungen und Weiterbildungen ergeben sich aus den abhängigen Ansprüchen.

Die Vorteile der Erfindung bestehen insbesondere darin, daß dem Empfänger ein senderseitig erzeugtes Steuersignal vorliegt, mittels dessen empfangsseitig eine Vielzahl von Darstellungsmöglichkeiten durchführbar sind.

So kann bei einer ersten Ausführungsform das übertragene Steuersignal, welches Informationen über die Größe der darzustellenden Bilder enthält, unmittelbar zur empfangsseitigen Steuerung des Speicherauslesevorganges verwendet werden, so daß das Fernsehsignal und das Begleitsignal in einer nicht überlagerten Großbild-/Kleinbilddarstellung auf dem Bildchirm angezeigt werden, wobei die Größe der dargestellten Bilder allein durch das im Sender erzeugte Steuersignal vorgegeben ist.

Bei einer zweiten Ausführungsform hat der Benutzer die Möglichkeit, durch Eingabe eines Bedienbefehls den Speicherauslesevorgang zusätzlich zu steuern. Mittels dieser zusätzlichen Steuerung hat der Benutzer beispielsweise die Möglichkeit, entweder das Fernsehbild oder das Begleitsignal auszublenden und zu bewirken, daß das nicht ausgeblendete Signal formatfüllend auf dem Bildschirm dargestellt wird. Weiterhin kann mittels dieser zusätzlichen Steuerung die Größe der auf dem Bildschirm dargestellten Bilder gleichsinnig oder gegensinnig verändert werden. Ferner kann mittels dieser zusätzlichen Steuerung eine Großbild-/Kleinbild-Umschaltung durchgeführt werden, d.h. das Kleinbild wird als Großbild dargestellt und umgekehrt.

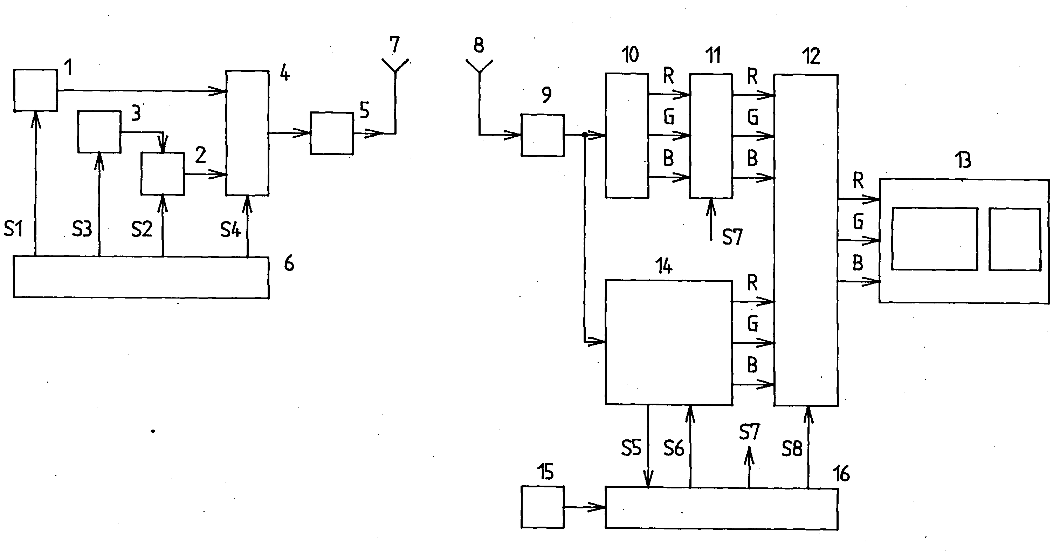

Weitere Vorteile der Erfindung ergeben sich aus der Erläuterung eines Ausführungsbeispiels anhand der Figur, welche die zum Verständnis der Erfindung notwendigen Bauteile eines Fernsehsenders und eines Fernsehempfängers zeigt.

Der Fernsehsender weist eine Schaltung 1 zur Erzeugung eines Fernsehsignals, eine Schaltung 2 zur Erzeugung eines Begleitsignals, bei welchem es sich um ein Textsignal handelt, eine Schaltung 3 zur Erzeugung eines die empfangsseitige Bildschirmdarstellung steuernden Steuersignals, welches Informationen über die Größe der dazustellenden Bilder enthält, eine Schaltung 4, 5 zur Erzeugung eines hochfrequenten Sendesignals aus dem Fernsehsignal, dem Begleitsignal und dem Steuersignal, eine Steuerschaltung 6 und eine Sendeantenne 7 auf. Die Schaltungen 1, 2 und 3 werden von der Steuerschaltung 6 über Steuerleitungen S1, S2 und S3 gesteuert. Das in der Schaltung 3 erzeugte Steuersignal wird der Schaltung 2 zugeführt und dort in das Textsignal eingefügt. In der Schaltung 4, die von der Steuerschaltung 6 über die Steuerleitung S4 gesteuert wird, wird das Textsignal, welches in Form eines digitalen Videotextsignals vorliegt, in die Vertikalaustastlücke des Fernsehsignals eingesetzt.

Alternativ zu dem dargestellten Ausführungsbeispiel kann das Steuersignal auch an anderer Stelle der Vertikalaustastlücke übertragen werden, d.h. nicht im Videotextsignal.

Weiterhin kann es sich bei dem zu übertragenden Fernsehsignal auch um ein digitales Fernsehsignal handeln, in welches in der Schaltung 4 ein ein digitales Begleitsignal, bei welchem es sich um ein Bild- oder Textsignal handeln kann, und ein digitales Steuersignal in Zeitmultiplexform eingefügt werden.

Mittels der Schaltung 5 wird das Signal in ein hochfrequentes Sendesignal umgesetzt und der Sendeantenne 7 zugeführt.

Der in der Figur gezeigte Fernsehempfänger, der an eine Empfangsanstenne 8 angeschlossen ist, weist ein Empfangsteil 9 mit einem Tuner und einem Zwischenfrequenzbaustein, eine Bildsignalverarbeitungsschaltung 10, einen Bildspeicher 11, einen R.G.B.-Umschalter 12, einen Bildschirm 13, einen Videotextdecoder 14, welcher einen Speicher enthält, einen Fernbedienungsempfänger 15 und einen Mikrocomputer 16 auf.

Die am Ausgang des Empfangsteils vorliegenden FBAS-Signale werden der Bildsignalverarbeitungsschaltung 10 und dem Videotextdecoder 14 zugeführt. Die am Ausgang der Bildsignalverarbeitungsschaltung 10 zur Verfügung stehenden R.G.B.-Signale werden in den Bildspeicher 11 eingeschrieben. Mittels des Videotextdecoders 14 wird das Steuersignal aus dem Videotextsignal abgetrennt und über die Verbindung S5 dem Mikrocomputer 16 zugeführt. Weiterhin werden im Speicher des Videotextdecoders 14 die übertragenen Textsignale abgelegt.

Der Mikrocomputer 16 erzeugt in Ansprache auf das Steuersignal Speicherauslesesignale für den Bildspeicher 11 und den Speicher des Videotextdecoders 14. Diese Speicherauslesesignale, die dem Bildspeicher 11 über die Verbindung S7 und dem Vidoetextdecoder über die Verbindung S6 zugeführt werden, steuern den Speicherauslesevorgang derart, daß das Bildsignal und das Textsignal jeweils in einer durch das Steuersignal vorgegebenen Bildschirmposition in nicht überlagerter Großbild-/Kleinbilddarstellung angezeigt werden. Dazu werden die am Ausgang des Bildspeichers 11 und des Vidoetextdecoders 14 vorliegenden R.G.B.-Signale über den R.G.B.-Umschalter 12, der vom Mikrocomputer 16 über die Verbindung S8 gesteuert wird, dem Bildschirm 13 zugeführt.

Bei einer weiteren Ausführungsform der Erfindung hat der Benutzer die Möglichkeit, durch die Eingabe eines Bedienbefehls den Speicherauslesevorgang zusätzlich zu steuern. Der vom Benutzer mittels des nicht gezeichneten Fernbedienungsgebers eingegebene Bedienbefehl wird dem Mikrocomputer 16 über den Fernbedienungsempfänger 15 zugeführt.

Beispielsweise hat der Benutzer, der das Textsignal nicht sehen möchte, die Möglichkeit, das Textsignal auszublenden und eine formatfüllende Darstellung des Bildsignals zu erreichen. Die dazu notwendigen Speicherauslesesignale werden vom Mikrocomputer 16 erzeugt und dem Bildspeicher 11 und dem im Videotextdecoder 14 angeordneten Speicher über die Verbindungen S6 und S7 zugeführt. Weiterhin hat der Benutzer die Möglichkeit, das Textsignal formatfüllend am Bildschirm darzustellen und das Bildsignal auszublenden oder eine Großbild-/Kleinbild-Umschaltung durchzuführen.

Die vorstehend beschriebene Erfindung bietet die Möglichkeit, auf dem Bildschirm Zusatzinformationen beliebiger Art zu einer Fernsehsendung einblenden zu können, ohne daß das Bild durch die Zusatzinformationen überlagert ist. Eine derartige Funktion kann bei zukünftigen Applikationen wie interaktives Fernsehen oder TV-Guide verwendet werden.

So können beispielsweise im Rahmen eines Reisejournals Bilder eines beliebten Urlaubsgebietes gezeigt und gleichzeitig in Form eines Kleinbildes eine Liste mit Hotels dieses Urlaubsgebietes eingeblendet werden. Der Benutzer kann dann mittels der Fernbedienung eines der Hotels auswählen. Diese Wahl wird vom Mikrocomputer 16 registriert und über einen über das E-PLUS-Netz oder Telefonnetz gebildeten Rückkanal zum Sender übertragen, so daß die vom Benutzer gewünschte Hotelreservierung unmittelbar vorgenommen werden kann. Die dazu weiterhin notwendige Benutzeridentifikation kann unter Verwendung einer in einen Schlitz des Fernsehempfängers eingeführten smart card erfolgen, deren Daten vom Mikrocomputer 16 gelesen und - soweit notwendig - ebenfalls über den Rückkanal zum Sender übertragen werden .

Alternativ zu der oben beschriebenen Möglichkeit, das Steuersignal in einem Videotextsignal zu übertragen, ist es auch möglich, das Steuersignal in einem anderen digitalen Datenkanal, beispielsweise einem NICAM-Datenkanal, zu übertragen.

Die Realisierung der Erfindung kann sowohl unter Verwendung eines entsprechend modifizierten Fernsehempfängers als auch in Form eines eigenständigen, dem Fernsehempfänger vorgeschalteten Zusatzgerätes erfolgen.

## Patentansprüche

1. Verfahren zur Übertragung eines Fernsehsignals mit folgenden Schritten
- Erzeugung eines Fernsehsignals,
- Erzeugung eines Begleitsignals,
- Erzeugung eines die empfangsseitige Bildschirmdarstellung ansteuernden Steuersignals, welches Informationen über die Größe der darzustellenden Bilder enthält,
- Erzeugung eines hochfrequenten Sendesignals aus dem Fernsehsignal, dem Begleitsignal und dem Steuersignal,
- Übertragung des Sendesignals,
- Rückgewinnung des Fernsehsignals, des Begleitsignals und des Steuersignals aus dem empfangenen Sendesignal,
- Abspeicherung des Fernsehsignals und des Begleitsignals,
- Steuerung des Speicherauslesevorganges mittels des Steuersignals derart, daß Fernseh- und Begleitsignal in einer nicht überlagerten Großbild/Kleinbilddarstellung auf dem Bildschirm angezeigt werden,
- Steuerung des Speicherauslesevorganges in Abhängigkeit von einem Benutzerbefehl,
- Umschaltung der Großbild-/Kleinbildumschaltung mittels des Benutzerbefehles,
- Ausblendbarkeit des Fernsehsignals und/oder Begleitsignals mittels des Benutzerbefehles.

2. Verfahren nach Anspruch 1,
**dadurch gekennzeichnet,**
daß das Begleitsignal ein Textsignal ist.

3. Verfahren nach Anspruch 1 oder 2,
**dadurch gekennzeichnet,**
daß das Steuersignal ein digitales Signal ist.

4. Verfahren nach einem oder mehreren der vorherigen Ansprüche,
**dadurch gekennzeichnet,**
daß es bidirektional ist und vom Empfänger zum Sender Informationen übertragen werden, die aus dem Fernsehsignal oder dem Begleitsignal abgeleitet sind.

5. Empfänger zur Durchführung des Verfahrens nach einem oder mehreren der vorhergehenden Ansprüche mit:
- einer einen Tuner und einen Zwischenfrequenzbaustein enthaltenden Eingangsschaltung,
- einer an die Eingangsschaltung angeschlossenen Bildsignalverarbeitungsschaltung,
- einem an die Bildverarbeitungschaltung angeschlossenen Bildspeicher,
- einer Begleitsignalauswertungsschaltung, die einen Speicher enthält,
- einem Mikrocomputer,
- wobei der Empfänger eine mit der Eingangsschaltung (9) verbundene Steuersignalsauswertungsschaltung (14) zur Abtrennung eines Steuersignals, welches Informationen über die Größe darzustellender Bilder enthält, aus dem von der Eingangsschaltung zur Verfügung gestellten Signal aufweist,
- die Steuersignalauswertungsschaltung (14) ausgangseitig mit dem Mikrocomputer (16) verbunden ist, und
- der Mikrocomputer (16) derart programmiert ist, daß er in Abhängigkeit von dem Steuersignalspeicher Auslesesignale für den Bildspeicher (11) und den Speicher der Begleitsignalauswertung (14) erzeugt.

6. Empfänger nach Anspruch 5,
**dadurch gekennzeichnet,**
daß der Mikrocomputer (16) derart programmiert ist, daß er zur Erzeugung der Speicherauslesesignale weiterhin Bedienbefehle berücksichtigt.

7. Empfänger nach Anspruch 5 oder 6.
**dadurch gekennzeichnet,**
daß mittels der Bedieneinheit am Bildschirm (13) dargestellte Informationen auswählbar sind und daß der Mikrocomputer (16) daraus abgeleitete Signale an einem Ausgang des Empfängers für einen Rückkanal zum Sender zur Verfügung stellt.

## Claims

1. Method for transmitting a television signal comprising the following steps:
- generation of a television signal,
- generation of an accompanying signal,
- generation of a control signal which drives the receiving-end picture display and which contains items of information relating to the size of the images to be displayed,
- generation of a high-frequency transmission signal from the television signal, the accompanying signal and the control signal,
- transmission of the transmission signal,
- retrieval of the television signal, the accompanying signal and the control signal from the received transmission signal,
- storage of the television signal and of the accompanying signal,
- control of the memory read-out operation by means of the control signal in such a way that television signal and accompanying signal are displayed in a non-superimposed large-image/small-image display on the picture screen,
- control of the memory read-out operation as a function of a user instruction,
- switching-over of the large-image/small-image switchover by means of the user instruction,
- suppressability of the television signal and/or accompanying signal by means of the user instruction.

2. Method according to Claim 1, characterized in that the accompanying signal is a text signal.

3. Method according to Claim 1 or 2, characterized in that the control signal is a digital signal.

4. Method according to one or more of the preceding claims, characterized in that it is bidirectional and items of information derived from the television signal or the accompanying signal are transmitted from the receiver to the transmitter.

5. Receiver for performing the method according to one or more of the preceding claims comprising:
- an input circuit containing a tuner and an intermediate-frequency unit,
- an image-signal processing circuit connected to the input circuit,
- an image memory connected to the image-processing circuit,
- an accompanying-signal evaluation circuit which contains a memory,
- a microcomputer,
- wherein the receiver comprises a control-signal evaluation circuit (14), connected to the input circuit (9), for separating a control signal containing items of information relating to the size of the image to be displayed from the signal provided by the input circuit,
- the control-signal evaluation circuit (14) is connected on the output side to the microcomputer (16), and
- the microcomputer (16) is programmed in such a way that it generates read-out signals for the image memory (11) and the accompanying-signal evaluation memory (14) as a function of the control-signal memory.

6. Receiver according to Claim 5, characterized in that the microcomputer (16) is programmed in such a way that, to generate the memory read-out signals, it continues to take account of operating instructions.

7. Receiver according to Claim 5 or 6, characterized in that items of information displayed on the picture screen (13) can be selected by means of the operating unit and in that the microcomputer (16) provides signals generated therefrom at an output of the receiver for a feedback channel to the transmitter.

## Revendications

1. Procédé pour transmettre un signal de télévision comprenant les étapes successives
- production d'un signal de télévision,
- production d'un signal d'accompagnement,
- production d'un signal de commande, qui commande la représentation sur l'écran, côté réception et qui contient des informations concernant la taille des images à représenter,
- production d'un signal d'émission à haute fréquence à partir du signal de télévision, du signal d'accompagnement et du signal de commande,
- transmission du signal d'émission,
- récupération du signal de télévision, du signal d'accompagnement et du signal de commande à partir du signal d'émission reçu,
- mémorisation du signal de télévision et du signal d'accompagnement,
- commande du processus de lecture en mémoire à l'aide du signal de commande de telle sorte que le signal de télévision et le signal d'accompagnement sont affichés sur l'écran, selon une représentation non superposée grande image/ petite image,
- commande du processus de lecture en mémoire en fonction d'une instruction d'utilisateur,
- commutation de la représentation grande image/petite image à l'aide de l'instruction de l'utilisateur,
- possibilité d'occultation du signal de télévision et/ou du signal d'accompagnement au moyen de l'instruction d'utilisateur.

2. Procédé selon la revendication 1, caractérisé en ce
que le signal d'accompagnement est un signal de texte.

3. Procédé selon les revendications 1 ou 2, caractérisé en ce
que le signal de commande est un signal numérique.

4. Procédé selon une ou plusieurs des revendications précédentes, caractérisé en ce
qu'il est bidirectionnel et que des informations, qui sont dérivées du signal de télévision ou du signal d'accompagnement, sont transmises du récepteur à l'émetteur.

5. Récepteur pour la mise en oeuvre du procédé selon une ou plusieurs des revendications précédentes, comprenant :
- un circuit d'entrée qui contient un syntoniseur et un module à fréquence intermédiaire,
- un circuit de traitement de signaux d'image raccordé au circuit d'entrée,
- une mémoire d'images raccordée au circuit de traitement d'images,
- un circuit d'exploitation du signal d'accompagnement, qui contient une mémoire,
- un micro-ordinateur,
- le récepteur comportant un circuit (14) d'exploitation du signal de commande, qui est relié au circuit d'entrée (9) et sert à séparer un signal de commande, qui contient des informations concernant la taille des images à représenter, du signal fourni par le circuit d'entrée,
- le circuit (14) d'exploitation du signal de commande est relié, côté sortie, au micro-ordinateur (16), et
- le micro-ordinateur (16) est programmé de telle sorte qu'en fonction de la mémoire de signaux de commande, il produit des signaux de lecture pour la mémoire d'images (11) et pour la mémoire de l'unité (14) d'exploitation du signal d'accompagnement.

6. Récepteur selon la revendication 5, caractérisé en ce
que le micro-ordinateur (16) est programme de telle sorte que pour la production des signaux de lecture en mémoire, il tient compte en outre d'instructions de commande.

7. Récepteur selon la revendication 5 ou 6, caractérisé en ce
que des informations représentées sur l'écran (13) peuvent être sélectionnées à l'aide d'une unité de commande et que le micro-ordinateur (16) délivre des signaux, qui sont obtenus à partir de là, à une sortie du récepteur pour un canal de renvoi à l'émetteur.
